# EUROPÄISCHE PATENTSCHRIFT

(11) **EP 4 220 094 B1**
(45) Veröffentlichungstag und Bekanntmachung des Hinweises auf die Patenterteilung: **25.06.2025**
(21) Anmeldenummer: 23151539.6
(22) Anmeldetag: 13.01.2023
(51) Int. Cl.: G01D 5/14, G01P 1/02, G01P 3/487

(54) **VORRICHTUNG ZUM ERFASSEN VON BEWEGUNGEN UND/ODER POSITIONEN EINES MAGNETISCHEN GEGENSTANDES**
DEVICE FOR DETECTING MOVEMENTS AND/OR POSITIONS OF A MAGNETIC OBJECT
DISPOSITIF POUR DÉTECTER DES MOUVEMENTS ET/OU DES POSITIONS D'UN OBJET MAGNÉTIQUE

(30) Priorität: 28.01.2022 DE 102022000345
(43) Veröffentlichungstag der Anmeldung: 02.08.2023
(73) Patentinhaber: Baumer Germany GmbH & Co. KG, 78333 Stockach (DE)
(72) Erfinder: Otto, Kai-Hans, 12526 Berlin (DE); Steuer, Christian, 13509 Berlin (DE); Lablack, Edgar, 12163 Berlin (DE); Reinauer, Torsten, 78465 Konstanz (DE)
(74) Vertreter: Strauss, Steffen

(56) Entgegenhaltungen:
- EP-B1- 1 687 592
- DE-A1- 4 342 069
- US-A1- 2010 253 327

## Beschreibung

Die vorliegende Erfindung betrifft eine Vorrichtung zum Erfassen von Bewegungen und / oder Positionen einer rotierenden Welle gemäß den Merkmalen des unabhängigen Anspruchs 1.

Herkömmliche Drehgeber dienen dazu, Messgrößen wie Winkelstellung, Drehzahl, Drehrichtung und / oder Winkelbeschleunigung einer rotierenden Welle eines Antriebes zu erfassen und an eine Steuerung zum Steuern bzw. Regeln des Antriebes zu übermitteln.

Derartige Vorrichtungen zum Erfassen von Bewegungen und / oder Positionen einer rotierenden Welle enthalten magnetische oder optische Maßverkörperungen sowie berührungslose Abtasteinheiten, welche Rohmessdaten für die Berechnung der Winkel- bzw. Positionsinformationen bereitstellen. Die Abtasteinheiten benötigen eine Spannungsversorgung, mit welcher sie betrieben werden können. Bei einem Ausfall der Spannungsversorgung bzw. Netzversorgung und gleichzeitigen Weiterbewegung der zu messenden rotierenden Welle werden keine weiteren Messdaten mehr erfasst und zur Verfügung gestellt.

Bei der Erfassung dieser Messgrößen muss gewährleistet sein, dass das Erfassen von Bewegungen und / oder Positionen der rotierenden Welle sicher erfasst werden kann. Das bedeutet, dass bei einem eventuellen Ausfall der Spannungsversorgung der Vorrichtung, die Erfassungsfunktionalität der Messgrößen weiter gewährleistet sein muss.

Um einer fehlerhaften Erfassungen von Messwerten aufgrund von Netzausfällen entgegenzuwirken, werden Drehgeber mit Batterien ausgestattet oder mittels Generatoren versorgt, die ihre Energie aus sich ändernden Magnetfeldern beziehen. Hierbei weisen die Drehgeber eine Energieversorgungseinheit auf, die einen Generator mit den erforderlichen Elektronikkomponenten, wie z.B. Spannungswandler aufweisen.

Drehgeber mit Batterien zur Energieversorgung haben den Nachteil, dass die Batterien gewechselt werden muss. D. h. diese Varianten haben eine stark begrenzte Lebensdauer.

Ein Drehgeber mit autarker Energieversorgung, die keine Batterien verwendet, ist z.B. aus der Europäischen Patentschrift EP 1 687 592 B1 bekannt.

Aus einer sich in einer Spule Hin und Her bewegenden Blattfeder werden Spannungsimpulse in der Spule erzeugt, wobei die Hin und Her Bewegung der Blattfeder durch ein auf die Blattfeder wirkendes Magnetfeld bewirkt wird. Die Blattfeder besteht hierbei aus einem magnetisch leitenden Material.

Es ist eine Aufgabe der vorliegenden Erfindung, den aus der EP 1 687 592 B1 bekannten Generator für eine Vorrichtung zum Erfassen von Bewegungen und / oder Positionen einer rotierenden Welle vorteilhaft weiterzubilden, insbesondere mit einem vereinfachten und insbesondere kostengünstigen Aufbau und einer erhöhten Lebensdauer zu realisieren.

Diese Aufgabe wird erfindungsgemäß durch eine Vorrichtung zum Erfassen von Bewegungen und / oder Positionen einer rotierenden Welle gemäß Anspruch 1 gelöst, wobei in Abhängigkeit von den Bewegungen und / oder den Positionen der Welle in mindestens einer Spule durch mindestens ein, eine Relativbewegung zu der Spule ausführendes und diese beaufschlagendes Magnetfeld in der Spule ein Spannungsimpuls erzeugt wird, wobei die Spule ein Spulengehäuse aufweist, welches aus einem ersten Gehäuseteil und einem zweiten Gehäuseteil besteht, die Gehäuseteile der Spule von einem Spulendraht umwickelt zusammengehalten sind und im Inneren eine Kavität bilden, in der eine aus magnetisch leitenden Material bestehende Blattfeder unter dem Einfluss des Magnetfeldes eine sprunghafte Hin- und Her Bewegung ausführt, wobei ein erster Bereich der Blattfeder in der Kavität beweglich angeordnet ist, und ein zweiter Bereich der Blattfeder zwischen dem ersten Gehäuseteil und dem zweiten Gehäuseteil fixiert ist.

Bei der Vorrichtung wird also in Abhängigkeit von den Bewegungen und/oder Positionen der Welle in der Spule durch ein, eine Relativbewegung zur Spule ausführendes und diese beaufschlagende Magnetfeld jeweils ein Spannungsimpuls erzeugt. Dieser Spannungsimpuls in der Spule wird durch den Reluktanz-Effektes einer aus magnetisch leitenden Material bestehende Blattfeder erzeugt, die unter dem Einfluss des Magnetfeldes in der Spule die Hin- und Her Bewegung ausführt. Das Magnetfeld wird von wenigstens einem Magnetpaar aus zwei benachbarten und gegenpoligen Magneten erzeugt, welche in Richtung der Bewegung des Gegenstandes hintereinander angeordnet sind und deren Längsachse ebenso wie die Längsachse der Spule im wesentlichen senkrechte Bewegung Richtung des Gegenstandes orientiert sind. Die Blattfeder polt das in der Spule wirksame Magnetfeld schlagartig um, wodurch in der die Blattfeder umgebenen Spule ein kräftiger Spannungsimpuls erzeugt wird.

Als Struktur der Spule dient ein Spulengehäuse, um welches ein Spulendraht angeordnet ist. Das Spulengehäuse umfasst ein erstes Gehäuseteil und ein zweites Gehäuseteil. Beide Gehäuseteile bilden die mechanische Struktur des Spulengehäuses.

Die Gehäuseteile bilden im inneren Bereich eine Kavität mit dem Ziel, einen Raum zu schaffen, in welcher die Blattfeder angeordnet werden kann. Die Blattfeder ist in der Kavität so angeordnet, dass sie von der Spule ebenfalls umgeben ist.

Der Vorteil der Erfindung besteht darin, dass durch einen quasi modularen Aufbau der Generatoreinheit eine einfache Montage und damit eine kostengünstige Herstellung realisiert werden kann. Zusätzlich kann die derart aufgebaute Generatoreinheit aufgrund einer leichten Größenänderung der einzelnen Teile mit unterschiedlichen Bauformen leicht angepasst und eingebaut werden.

Durch die modulare Anordnung der Elemente der Generatoreinheit ist eine kompakte Anordnung bzw. ein kompakter Aufbau der Vorrichtung zum Erfassen von Bewegungen und / oder Positionen einer rotierenden Welle möglich.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile wird im Folgenden eingegangen.

Gemäß einer Ausführungsform kann das erste und das zweite Gehäuseteil an wenigstens einem Ende mittels einer Zapfenverbindung miteinander verbunden sein.

In einer Ausführungsform kann die Zapfenverbindung dabei ein im ersten Gehäuseteil angeordnetes Zapfenloch und einen im zweiten Gehäuseteil in das Zapfenloch formschlüssig passenden Zapfen aufweisen. Dies hat den Vorteil, dass beide Gehäuseteile im Herstellungsprozess auf einfache Weise miteinander verbunden werden können. Diese Ausführungsform ist wenig aufwendig und bewirkt zudem durch den zum Zapfenloch formschlüssig passenden Zapfen eine vorteilhafte Ausrichtung der Gehäuseteile zueinander.

Um Aufwand bei der Ausrichtung der Blattfeder zum Spulengehäuse zu reduzieren, kann die Blattfeder an dem zweiten Bereich der Blattfeder eine Öffnung aufweisen, durch die der Zapfen des zweiten Gehäuseteils steckbar ist, sodass die Blattfeder mittels der Zapfenverbindung innerhalb der Kavität fixierbar ist. Damit lässt sich die Blattfeder in vorteilhafter Weise innerhalb der Kavität des Spulengehäuses fixieren.

Die Öffnung der Blattfeder weist dabei eine zum Zapfen formschlüssig passende Geometrie auf. Zur Ausrichtung der Blattfeder kann somit der Zapfen die Blattfeder in der Öffnung durchragen. Vorteilhafterweise kann die Öffnung eine zum Zapfen formschlüssig passende Geometrie aufweisen, in welcher der Zapfen die Blattfeder bis zum Anschlag am ersten Gehäuseteil durchragt.

Gemäß einer Ausführungsform weisen die Gehäuseteile jeweils an den Außenseiten eine Ausnehmung auf, in die der Spulendraht gewickelt ist. Somit umgibt der Spulendraht beide Gehäuseteilen und hält beide Gehäuseteilen zusammen zu einem Spulengehäuse. Der Spulendraht bildet die Spulenwicklung und ist so in den Ausnehmungen der Außenseiten der Gehäuseteilen angeordnet, dass die Gehäuseteile zusammengehalten werden und damit diese Struktur eine Stabilisierung der zwischen den Gehäuseteilen fixierten Blattfeder bewirkt.

Die Ausnehmungen weisen dabei eine Tiefe auf, die den Spulendraht aufnimmt und nicht über die Außenseite des Spulengehäuses ragen lässt. Dies ermöglicht einen Einbau der Spule ohne Fehlkontakten, welche beim Überragen der Spulenwicklungen über die Außenseite des Spulengehäuses hinaus entstehen können.

Ferner können die Gehäuseteile im Bereich der Zapfenverbindung an wenigstens einer Stossstelle verklebt sein. Vorzugsweise sind die Gehäuseteile im Bereich der Zapfenverbindung an zwei Stoßstellen miteinander verklebt.

Gemäß einer Ausführungsform sind das erste und das zweite Gehäuseteil aus einem glasfaserverstärktem Kunststoff ausgeführt.

Die Kavität ist aus zwei zueinander zugewandten und in den Gehäuseteilen ausgebildeten Aussparungen gebildet. Eine Tiefe der Aussparung entlang einer Gehäuselängsachse der Gehäuseteile nimmt hierbei von einer minimalen Tiefe bis zu einer maximalen Tiefe zu.

Die Blattfeder ist in der Kavität so angeordnet, dass der bewegliche Bereich der Blattfeder zu der maximalen Tiefe der Aussparung der Gehäuseteile zeigt. Das ermöglicht der Blattfeder eine optimale Bewegung innerhalb der Kavität.

Gemäß einer Ausführungsform weist die Kavität einen sich entlang der Gehäuselängsachse verjüngenden oder trompetenförmigen Querschnitt auf. Dies hat den Vorteil, dass eine Bewegung der Blattfeder begrenzt wird und damit die Blattfeder nur in einem bestimmten Bereich aufgrund des auf sie einwirkenden Magnetfeldes hin und her bewegbar ist. Auf diese Weise kann eine Überbeanspruchung der Blattfeder vermieden und damit die Lebensdauer der Blattfeder erhöht werden.

Das Magnetfeld, welches die Blattfeder beaufschlagt, kann von Magnetpaaren, wie beispielsweise Blockmagnetpaaren mit wechselnden Polungen (N,S) erzeugt werden, wobei sich die Blockmagnetpaare auf eine drehende Scheibe befinden. Die drehende Scheibe ist hierbei mit der bewegenden bzw. drehenden Welle verbunden.

Die beschriebene Struktur ermöglicht es, dass die Blattfeder in vorteilhafter Weise in einfachen Montageschritten und unter Beachtung der notwendigen Toleranzen in dem Spulengehäuse positioniert werden kann. Die Blattfeder ist von der Spule umgeben und gleichzeitig so genau positioniert, dass jede einzelne Hin und Her Bewegung des freien und beweglichen Endes der Blattfeder eine maximale Auslenkung, nämlich die halbe Breite der Kavität nicht überschreitet. Dadurch wird die Lebensdauer der Blattfeder und damit der Vorrichtung erhöht.

Die Blattfeder ist von dem um die Gehäuseteile gewickelten Spulendraht umgeben. Die Blattfeder wird aufgrund des magnetisch leitenden Materials beim Vorbeibewegen der Blockmagnetpaare durch das auf sie einwirkenden Magnetfeld innerhalb der Kavität der Spule letztendlich sprunghaft bewegt, wodurch ein Spannungsimpuls in die Spule induziert wird. Der Spannungsimpuls wird über geeignete Kontaktmittel zu einer Elektronik weitergeleitet.

Die Vorrichtung gemäß der Erfindung ermöglicht eine energieautarke Signalerzeugung, insbesondere dann, wenn die Netzversorgung der Vorrichtung unterbrochen ist.

Die erfindungsgemäße Vorrichtung eignet sich für den Einsatz in Applikationen, in denen mit einem Energieversorgungsausfall zu rechnen ist, da dank ihr die für die Ermittlung von Positionssignalen und der damit erforderlichen Sensorelektronik benötigten Versorgungsspannung unabhängig von der Energieversorgung erzeugt werden können. Weiterhin trägt in solchen Applikationen die Vorrichtung zu einer erhöhten Systemstabilität bei, da es ohne eine Abhängigkeit von alternativen Energiequellen, wie z.B. Batterien, Störungen reduziert und zu einer Robustheit der Vorrichtung beiträgt.

Im Folgenden ist die Erfindung beispielhaft mit Bezug auf die Zeichnungen näher erläutert. Die bei den gezeigten Ausführungsformen beispielhaft dargestellte Merkmalskombination kann nach Maßgabe der obigen Ausführungen entsprechend den für einen bestimmten Anwendungsfall notwendigen Eigenschaften der erfindungsgemäßen Vorrichtung und/oder des erfindungsgemäßen Verfahrens durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt.

Es zeigen:
- Fig. 1:: eine schematische Darstellung einer erfindungsgemäßen Vorrichtung gemäß einer beispielhaften Ausführungsform, in zusammengebauter Form;
- Fig. 2:: eine schematische Darstellung einer erfindungsgemäßen Vorrichtung gemäß einer beispielhaften Ausführungsform, als Explosionszeichnung;
- Fig. 3:: eine schematische Detailansicht eines Gehäuseteils einer erfindungsgemäßen Vorrichtung;
- Fig. 4:: eine schematische Detailansicht A einer Aussparung in einem Gehäuseteil einer erfindungsgemäßen Vorrichtung; und
- Fig. 5:: eine erfindungsgemäße Vorrichtung mit einer Magnetfelderzeugungseinheit.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Obwohl einige Aspekte der Erfindung lediglich im Rahmen einer Vorrichtung beschrieben werden, ist es selbstverständlich möglich, dass diese Aspekte auch eine Beschreibung eines entsprechenden Verfahrens darstellen, wobei z.B. ein Block, ein Modul, eine Einheit oder eine Vorrichtung einem Verfahrensschritt oder einer Funktion eines Verfahrensschritts entspricht. Analog dazu stellen Aspekte, die im Rahmen eines Verfahrensschritts beschrieben werden, auch entsprechend eine Beschreibung eines Blocks, eines Moduls, einer Einheit oder einer Eigenschaft der Vorrichtung dar.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

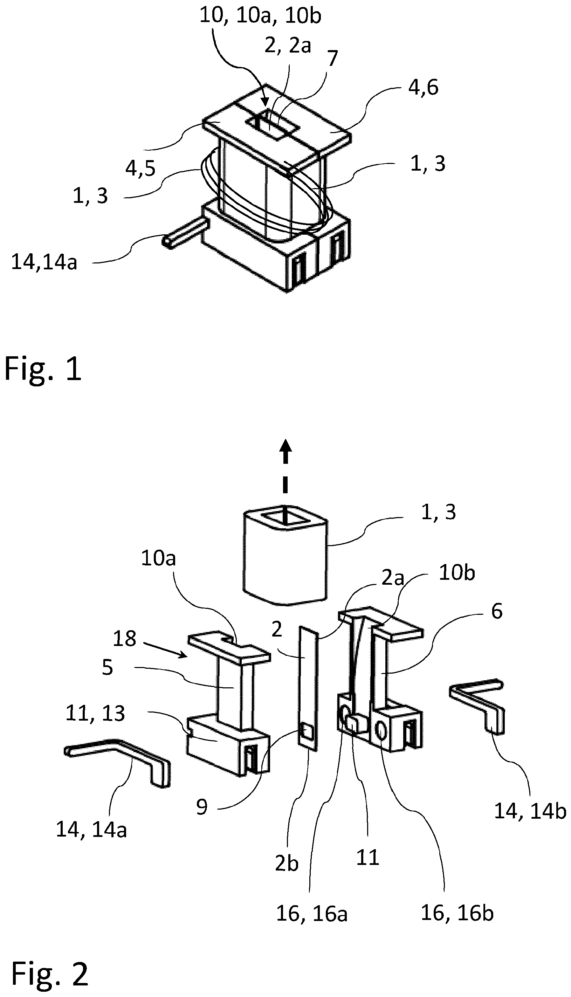

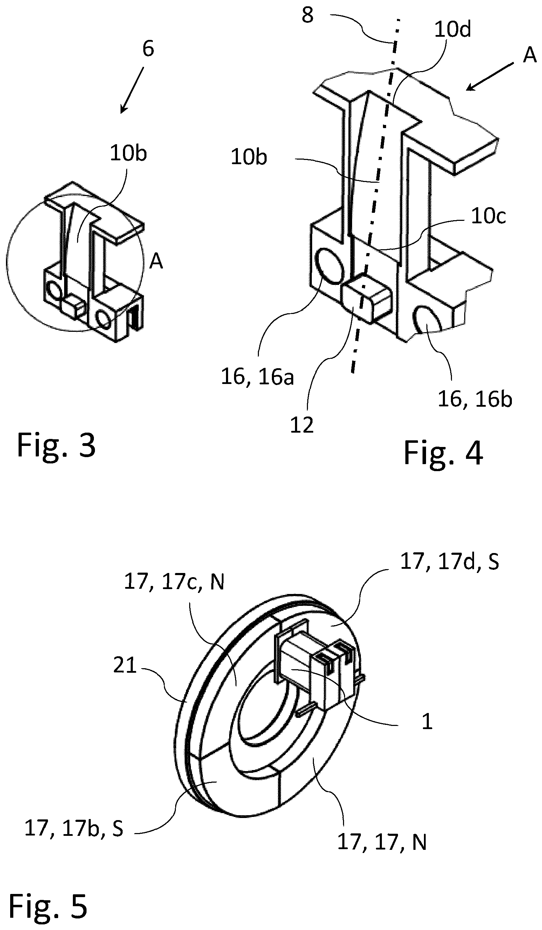

Im Folgenden ist eine erfindungsgemäße Vorrichtung zum Erfassen von Bewegungen und/oder Positionen einer rotierenden Welle mit Bezug auf Fig. 1 und 2 beschrieben. Mit Bezug auf Fig. 3 und 4 sind ein zur erfindungsgemäßen Vorrichtung 1 gehörender zweiter Gehäuseteil 6 und eine Detailansicht A des zweiten Gehäuseteils 6 beschrieben. Ferner ist eine Ausführungsvariante der Vorrichtung mit einer Magnetfelderzeugungseinheit anhand von Fig. 5 beschrieben.

Die Figur 1 zeigt eine perspektivische Ansicht einer Spule 1 mit einer Blattfeder 2 im montierten Zustand. Die Spule 1 bildet zusammen mit der Blattfeder 2 einen Teil einer autarken Energieversorgungseinheit und diese ist Bestandteil einer Vorrichtung zum Erfassen von Bewegungen und / oder Positionen einer rotierenden Welle, beispielsweise von einer Antriebswelle (nicht dargestellt). Ferner ist ein eine Relativbewegung zu der Spule 1 ausführendes und diese beaufschlagendes Magnetfeld vorgesehen. Die Spule 1 umfasst Kontaktmittel 14a, welche eine elektrische Verbindung zu einer Platine herstellt. Auf der Platine befinden sich unter anderem elektronische Elemente der Signalerfassung und Signalauswertung.

In Abhängigkeit von den Drehbewegungen der Antriebswelle wird in der Spule 1 durch das eine Relativbewegung zu der Spule 1 ausführende und dieses beaufschlagende Magnetfeld in der Spule 1 ein Spannungsimpuls erzeugt. Die Spule 1 weist hierbei ein Spulengehäuse 4 auf. Das Spulengehäuse 4 besteht aus einem ersten Gehäuseteil 5 und einem zweiten Gehäuseteil 6. Die Gehäuseteile 5 und 6 der Spule 1 sind von einem Spulendraht 3 umwickelt. Der Spulendraht 3 hält dabei das erste und zweite Gehäuseteil 5 und 6 zusammen. Die Gehäuseteilen 5 und 6 bilden im zusammengebauten Zustand in ihrem Inneren eine Kavität 10. In der Kavität 10 führt eine aus magnetisch leitendem Material bestehende Blattfeder 2 unter dem Einfluss des Magnetfeldes eine Hin- und Her Bewegung aus.

Die Anordnung der Blattfeder 2 innerhalb der Gehäuseteile 5 und 6 ist in Figur 2 zu sehen. Ein erster Bereich 2a der Blattfeder 2 ist in der Kavität 10 beweglich angeordnet, wohingegen ein zweiter Bereich 2b der Blattfeder 2 zwischen dem ersten Gehäuseteil 5 und dem zweiten Gehäuseteil 6 fixiert ist. Die Spule 1, die aus einem eng gewickelten Spulendraht 3 besteht, ist schematisch in der Figur 2 dargestellt.

Das auf die Spule 1 wirkende Magnetfeld wird in Abhängigkeit der Drehbewegung der Welle durch vier auf einer Scheibe 21 angeordneten Blockmagneten 17a, 17b, 17c und 17d mit wechselnder Polung, Nord und Süd, erzeugt. Die Scheibe 21 ist dabei mit der Welle verbunden. Eine Ausführungsvariante hierzu ist in der Figur 5 dargestellt. Es ist aber auch denkbar, dass auf der Scheibe 21 nur zwei Blockmagneten 17 mit wechselnder Polung, Nord und Süd, vorgesehen sind.

Durch die Drehbewegung der auf der Scheibe 21 befindlichen Blockmagneten 17a, 17b, 17c und 17d und deren Magnetfeld, wird die Hin und Her Bewegung der in Figur 2 dargestellt Blattfeder 2 innerhalb der Kavität 10 bewirkt, die durch Verbindung des ersten Gehäuseteiles 5 mit dem zweiten Gehäuseteile 6 gebildet ist. Beide Gehäuseteile 5 und 6 bilden somit die mechanische Struktur des Spulengehäuses 4.

Die Blattfeder 2 ist aus einem magnetisch leitenden Material ausgeführt. Das erste und zweite Gehäuseteil 5 und 6 bilden ein Spulengehäuse 4, welches von einem Spulendraht 3 umwickelt ist und mit dem Spulendraht 3 die Spule 1 bildet. Aufgrund der sprunghaften Hin und Her Bewegung der Blattfeder 2 innerhalb der Kavität 10, wird ein Spannungsimpuls in der Spule 1 erzeugt. Dieser Spannungsimpuls in der Spule 1 wird durch den Reluktanz-Effektes der aus dem magnetisch leitenden Material bestehenden Blattfeder 2 erzeugt. Die Blattfeder 2 polt das in der Spule 1 wirksame Magnetfeld schlagartig um, wodurch somit in der die Blattfeder 2 umgebenen Spule 1 ein kräftiger Spannungsimpuls erzeugt wird.

Wie in Figur 2 dargestellt, ist das erste und das zweite Gehäuseteil 5 und 6 an einem Ende mittels einer Zapfenverbindung 11 miteinander verbunden. Die Zapfenverbindung 11 besteht aus einem im ersten Gehäuseteil 5 angeordnetes Zapfenloch 13 und einen im zweiten Gehäuseteil 6 in das Zapfenloch 13 formschlüssig passenden Zapfen 12. Dies hat den Vorteil, dass beide Gehäuseteile 5 und 6 im Herstellungsprozess auf einfache Weise miteinander verbunden werden können. Diese Ausführungsform ist wenig aufwendig und bewirkt zudem durch den zum Zapfenloch 13 formschlüssig passenden Zapfen 12 eine vorteilhafte Ausrichtung der Gehäuseteile 5 und 6 zueinander.

Um Aufwand bei der Ausrichtung der Blattfeder 2 zum Spulengehäuse 4 zu reduzieren, ist in der Blattfeder 2 an einem zweiten Bereich der Blattfeder 2 eine Öffnung 9 vorgesehen, durch die der Zapfen 12 des zweiten Gehäuseteils 6 steckbar ist, sodass die Blattfeder 2 mittels der Zapfenverbindung 11 innerhalb der Kavität 10 fixierbar ist. Damit lässt sich die Blattfeder 2 in vorteilhafter Weise innerhalb der Kavität 10 des Spulengehäuses 4 fixieren.

Die Öffnung 9 der Blattfeder 2 weist dabei eine zum Zapfen 12 formschlüssig passende Geometrie auf. Zur Ausrichtung der Blattfeder 2 kann somit der Zapfen 12 die Blattfeder 2 in der Öffnung 9 durchragen. In vorteilhafter Weise kann die Öffnung 9 eine zum Zapfen 12 formschlüssig passende Geometrie aufweisen, in welcher der Zapfen 12 die Blattfeder 2 bis zum Anschlag am ersten Gehäuseteil 5 durchragt.

Der Zapfen 11 kann somit gemäß Fig. 2 in vorteilhafter Weise mit der durchragten Blattfeder 2 mit dem Zapfenloch 13 des ersten Gehäuseteils 5 verbunden sein, was sowohl dem Zusammenbau des Spulengehäuses 4 als auch der Befestigung der ausgerichteten Blattfeder 2 dient. Damit kann in einem Schritt die Blattfeder 2 zwischen den Gehäuseteilen 5 und 6 befestigt und im selben Schritt das Spulengehäuse 4 zusammengebaut werden. Dies vereinfacht den Aufbau und die Herstellung der Vorrichtung bei einer reproduzierbaren Genauigkeit der Position der Blattfeder 2 zum Spulengehäuse 4.

In Figur 2 ist eine Explosionszeichnung der Spule 1 mit der Blattfeder 2 dargestellt. Zur Erreichung einer optimalen Verbindung des ersten mit dem zweiten Gehäuseteil 5 und 6 sind im Bereich der Zapfenverbindung 11 zwei Stossstellen 16a und 16b vorgesehen, an denen die beiden Gehäuseteilen 5 und 6 miteinander verklebt werden können. Dies hat den Vorteil, dass ein mögliches mechanisches Spiel zwischen den Gehäuseteilen 5 und 6 ausgeglichen werden kann. Zudem gewährleistet die Verklebung an den zwei Stoßstellen 12, 13 eine stabile mechanische Verbindung der Gehäuseteilen 5 und 6 miteinander.

Eine optimale geometrische Struktur der Kavität 10 geht aus den Figuren 3 und 4 hervor, welche beispielhaft das zweite Gehäuseteil 6 im Detail zeigen. Die Figur 4 ist dabei eine Detaildarstellung A der Darstellung der Figur 3.

Die Kavität 10 ist aus den zwei zueinander zugewandten und in den Gehäuseteilen 5 und 6 ausgebildeten Aussparungen 10 gebildet, wobei beispielhaft in Figur 4 die Aussparung 10b des zweiten Gehäuseteils 6 dargestellt ist. Eine Tiefe der Aussparung 10b entlang einer Gehäuselängsachse 8 des zweiten Gehäuseteils 6 nimmt hierbei von einer minimalen Tiefe 10c bis zu einer maximalen Tiefe 10d zu.

Die Blattfeder 2 ist in der Kavität 10 so angeordnet, dass der bewegliche zweite Teil 2a der Blattfeder 2 zu der maximalen Tiefen der Aussparung der Gehäuseteile 5 und 6 zeigt. Das ermöglicht der Blattfeder 2 eine optimale Bewegung innerhalb der Kavität 10.

Bevorzugt und wie in der Figur 4 dargestellt, weist die Kavität 10 einen sich entlang der Gehäuselängsachse 8 verjüngenden oder trompetenförmigen Querschnitt auf. Dies hat den Vorteil, dass eine Bewegung der Blattfeder 2 begrenzt wird und damit die Blattfeder 2 nur in einem bestimmten Bereich aufgrund des auf sie einwirkenden Magnetfeldes hin und her bewegbar ist. Auf diese Weise kann eine Überbeanspruchung der Blattfeder 2 vermieden und damit die Lebensdauer der Blattfeder 2 erhöht werden.

Das Magnetfeld, welches die Blattfeder 2 beaufschlagt, kann von einer Magnetfelderzeugungseinrichtung erzeugt werden, wie sie beispielhaft in Figur 5 dargestellt ist. Die Magnetfelderzeugungseinrichtung besteht aus Paaren von Blockmagneten 17a, 17b, 17c und 17d mit wechselnden Polungen (N, S), wobei die Blockmagnete 17a, 17b, 17c und 17d auf einer drehende Scheibe 21 angeordnet sind. Die drehende Scheibe 21 ist hierbei mit der drehenden Antriebswelle (in Figur 5 nicht dargestellt) verbunden. Eine optische oder magnetische Maßverkörperung in Verbindung mit einer entsprechenden Detektionseinheit zur Bestimmung der Umdrehungszahl und/oder der Position der Antriebswelle kann dabei ebenfalls auf der Scheibe 21 vorgesehen sein (nicht dargestellt).

Wie Fig. 5 beispielshaft zeigt, kann die Scheibe 21 einzelne Blockmagnete 17a, 17b, 17c sowie 17d mit verschiedenen Polen N, S aufweisen, die lückenlos zueinander ringförmig auf der Scheibe 21 angeordnet sind. Bewegt sich die Scheibe 21 in entsprechenden Abstand an der in der Spule 1 befindlichen Blattfeder 2 vorbei, wird mit jedem Polwechsel N-S oder S-N ein Spannungsimpuls in der Spule 1 durch die sprunghafte Hin und Her Bewegung der Blattfeder 2 in der Spule 1 generiert. Die vorteilhafte lückenlose Anordnung der Blockmagneten auf der Scheibe 21 hat die technische Wirkung, dass in der Spule 1 Spannungsimpulse generiert werden, die in ihrem Signalverlauf weder nachteilige Nachschwinger noch Vorschwinger aufweisen. Zudem ist das Magnetfeld aufgrund dieser Anordnung deutlich stärker und ein Abstand bzw. Luftspalt zwischen der Magnetfelderzeugungseinrichtung (ringförmig angeordnete Blockmagneten auf der Scheibe 21) und der Blattfeder 2 kann grösser gewählt werden.

Die beschriebene Struktur ermöglicht es, dass die Blattfeder 2 in vorteilhafter Weise in einfachen Montageschritten und unter Beachtung der notwendigen Toleranzen in dem Spulengehäuse 4 positioniert werden kann. Die Blattfeder 2 ist von der Spule 1 umgeben und gleichzeitig so genau positioniert, dass jede einzelne Hin und Her Bewegung des freien und beweglichen Endes 2a der Blattfeder 2 eine maximale Auslenkung, nämlich die halbe Breite der Kavität 10 nicht überschreitet. Dadurch wird die Lebensdauer der Blattfeder 2 und damit der Vorrichtung zum Erfassen von Drehbewegungen einer Antriebswelle erhöht.

Die Blattfeder 2 ist von dem um die Gehäuseteilen 5 und 6 gewickelten Spulendraht 3 umgeben. Die Blattfeder 2 wird aufgrund des magnetisch leitenden Materials beim Vorbeibewegen der Blockmagneten 17a, 17b, 17c sowie 17d bzw. Blockmagentenpaare 17a, 17b sowie 17c, 17d durch das auf sie einwirkenden Magnetfeld innerhalb der Kavität 10 der Spule 1 sprunghaft hin und her bewegt, wodurch ein Spannungsimpuls in die Spule 1 induziert wird. Der Spannungsimpuls wird über geeignete Kontaktmittel 14a, 14b zu einer Elektronik weitergeleitet.

## Patentansprüche

1. Vorrichtung zum Erfassen von Bewegungen und / oder Positionen einer rotierenden Welle, mit mindestens einer Spule und einer Blattfeder, wobei bei der Vorrichtung in Abhängigkeit von den Bewegungen und / oder den Positionen der Welle in der Spule (1) durch mindestens ein, eine Relativbewegung zu der Spule (1) ausführendes und diese beaufschlagendes Magnetfeld in der Spule (1) ein Spannungsimpuls erzeugt wird, wobei die Spule (1) ein Spulengehäuse (4) aufweist, welches aus einem ersten Gehäuseteil (5) und einem zweiten Gehäuseteil (6) besteht, die Gehäuseteile (5, 6) der Spule (1) von einem Spulendraht (3) der Spule umwickelt zusammengehalten sind und im Inneren eine Kavität (10) bilden, in der die aus magnetisch leitendem Material bestehende Blattfeder (2) unter dem Einfluss des Magnetfeldes eine sprunghafte Hin- und Her Bewegung ausführt, wobei ein erster Bereich (2a) der Blattfeder (2) in der Kavität (10) beweglich angeordnet ist, und ein zweiter Bereich (2b) der Blattfeder (2) zwischen dem ersten Gehäuseteil (5) und dem zweiten Gehäuseteil (6) fixiert ist.

2. Vorrichtung nach Anspruch 1, wobei das erste und das zweite Gehäuseteil (5, 6) an wenigstens einem Ende mittels einer Zapfenverbindung (11) miteinander verbunden sind.

3. Vorrichtung nach Anspruch 2, wobei die Zapfenverbindung (11) ein im ersten Gehäuseteil (5) angeordnetes Zapfenloch (13) und einen im zweiten Gehäuseteil (6) in das Zapfenloch (13) formschlüssig passenden Zapfen (12) umfasst.

4. Vorrichtung nach Anspruch 3, wobei der zweite Bereich der Blattfeder (2, 2b) eine Öffnung (9) aufweist durch die der Zapfen (12) des zweiten Gehäuseteiles (6) steckbar ist, sodass die Blattfeder (2) mittels der Zapfenverbindung (11) innerhalb der Kavität (10) fixierbar ist.

5. Vorrichtung nach einem der Ansprüche 2 bis 4, wobei die Gehäuseteile (5, 6) im Bereich der Zapfenverbindung (11) an wenigstens einer Stoßstelle (16) vorzugsweise zwei Stoßstellen (16, 16a, 16b) verklebt sind.

6. Vorrichtung nach einem der vorhergehenden Ansprüche, wobei die Gehäuseteile (5, 6) jeweils an den Außenseiten eine Ausnehmung (18) aufweisen, in die der Spulendraht (3) gewickelt ist.

7. Vorrichtung nach einem der vorhergehenden Ansprüche, wobei das erste und das zweite Gehäuseteil (5, 6) aus einem glasfaserverstärktem Kunststoff ausgeführt ist.

8. Vorrichtung nach einem der vorhergehenden Ansprüche, wobei die Kavität (10) aus zwei zueinander zugewandten und in den Gehäuseteilen (5,6) ausgebildeten Aussparungen (10a, 10b) gebildet ist, wobei jeweils eine Tiefe der Aussparungen (10a, 10b) entlang einer Gehäuselängsachse (8) der Gehäuseteile (5, 6) von einer minimalen Tiefe (10c) bis zu einer maximalen Tiefe (10d) zunimmt.

9. Vorrichtung (1) nach Anspruch 8, wobei die Blattfeder (2) in der Kavität (10) so angeordnet ist, dass der erste Bereich (2a) der Blattfeder (2) zu der maximalen Tiefe (10d) der jeweiligen Aussparung (10a, 10b) der Gehäuseteilen (5, 6) zeigt.

10. Vorrichtung (1) nach Anspruch 9, wobei die Kavität (10) zur Begrenzung einer Bewegung der Blattfeder (2) einen sich entlang der Gehäuselängsachse (8) verjüngenden oder trompetenförmigen Querschnitt aufweist.

11. Vorrichtung (1) nach einem der vorhergehenden Ansprüche, umfassend das Magnetfeld erzeugende Blockmagnetpaare (17a, 17b; 17, 17c,17d) mit wechselnden Polungen (N, S).

## Claims

1. Device for detecting movements and/or positions of a rotating shaft, comprising at least one coil and a leaf spring, wherein in the device, depending on the movements and/or positions of the shaft, a voltage pulse is generated in the coil (1) by at least one magnetic field executing a relative movement to the coil (1) and acting on the coil (1), wherein the coil (1) has a coil housing (4) consisting of a first housing part (5) and a second housing part (6), a coil wire (3) of the coil is wound around the housing parts (5, 6) of the coil (1) to hold them together and said housing parts form a cavity (10) on the inside, in which the leaf spring (2), made of magnetically conductive material, executes a sudden back-and-forth movement under the influence of the magnetic field, wherein a first region (2a) of the leaf spring (2) is movably arranged in the cavity (10), and a second region (2b) of the leaf spring (2) is arranged between the first housing part (5) and the second housing part (6).

2. Device according to claim 1, wherein the first and the second housing part (5, 6) are connected to one another at at least one end by means of a pin connection (11).

3. Device according to claim 2, wherein the pin connection (11) comprises a pin hole (13) arranged in the first housing part (5) and a pin (12) in the second housing part (6) which fits form-fittingly into the pin hole (13).

4. Device according to claim 3, wherein the second region of the leaf spring (2, 2b) has an opening (9) through which the pin (12) of the second housing part (6) can be inserted, so that the leaf spring (2) can be fixed within the cavity (10) by means of the pin connection (11).

5. Device according to any of claims 2 to 4, wherein the housing parts (5, 6) are bonded in the region of the pin connection (11) at at least one joint (16), preferably two joints (16, 16a, 16b).

6. Device according to any of the preceding claims, wherein the housing parts (5, 6) each have a recess (18) on the outer sides into which the coil wire (3) is wound.

7. Device according to any of the preceding claims, wherein the first and the second housing part (5, 6) are made of a glass-fiber-reinforced plastics material.

8. Device according to any of the preceding claims, wherein the cavity (10) is formed from two recesses (10a, 10b) facing one another and formed in the housing parts (5, 6), wherein a depth of each of the recesses (10a, 10b) increases along a housing longitudinal axis (8) of the housing parts (5, 6) from a minimum depth (10c) to a maximum depth (10d).

9. Device (1) according to claim 8, wherein the leaf spring (2) is arranged in the cavity (10) such that the first region (2a) of the leaf spring (2) points to the maximum depth (10d) of the relevant recess (10a, 10b) of the housing parts (5, 6).

10. Device (1) according to claim 9, wherein in order to limit a movement of the leaf spring (2), the cavity (10) has a tapered or trumpet-shaped cross-section along the housing longitudinal axis (8).

11. Device (1) according to any of the preceding claims, comprising block magnet pairs (17a, 17b; 17, 17c, 17d) with alternating polarities **(N,** S), which generate the magnetic field.

## Revendications

1. Dispositif permettant de détecter des mouvements et/ou des positions d'un arbre rotatif, comportant au moins une bobine et un ressort à lames, dans lequel, dans le dispositif, en fonction des mouvements et/ou des positions de l'arbre dans la bobine (1), une impulsion de tension est générée dans la bobine (1) par au moins un champ magnétique exécutant un mouvement relatif par rapport à la bobine (1) et sollicitant celle-ci, dans lequel la bobine (1) présente un boîtier de bobine (4) qui est constitué d'une première partie de boîtier (5) et d'une seconde partie de boîtier (6), les parties de boîtier (5, 6) de la bobine (1) sont maintenues ensemble de manière à être entourées par un fil de bobine (3) de la bobine et forment à l'intérieur une cavité (10) dans laquelle le ressort à lames (2) constitué d'un matériau magnétiquement conducteur exécute un mouvement de va-et-vient brusque sous l'influence du champ magnétique, dans lequel une première zone (2a) du ressort à lames (2) est disposée de manière à être mobile dans la cavité (10), et une seconde zone (2b) du ressort à lames (2) est fixée entre la première partie de boîtier (5) et la seconde partie de boîtier (6).

2. Dispositif selon la revendication 1, dans lequel la première et la seconde partie de boîtier (5, 6) sont reliées l'une à l'autre à au moins une extrémité au moyen d'une liaison par tenon (11).

3. Dispositif selon la revendication 2, dans lequel la liaison par tenon (11) comprend une mortaise (13) disposée dans la première partie de boîtier (5) et un tenon (12) s'adaptant par complémentarité de forme dans la mortaise (13) dans la seconde partie de boîtier (6).

4. Dispositif selon la revendication 3, dans lequel la seconde zone du ressort à lames (2, 2b) présente une ouverture (9) à travers laquelle le tenon (12) de la seconde partie de boîtier (6) peut être enfiché, de sorte que le ressort à lames (2) peut être fixé à l'intérieur de la cavité (10) au moyen de la liaison par tenon (11).

5. Dispositif selon l'une des revendications 2 à 4, dans lequel les parties de boîtier (5, 6) sont collées dans la zone de la liaison par tenon (11) en au moins un point de jonction (16), de préférence deux points de jonction (16, 16a, 16b).

6. Dispositif selon l'une des revendications précédentes, dans lequel les parties de boîtier (5, 6) présentent respectivement sur les côtés extérieurs un évidement (18) dans lequel est enroulé le fil de bobine (3).

7. Dispositif selon l'une des revendications précédentes, dans lequel la première et la seconde partie de boîtier (5, 6) sont réalisées en une matière plastique renforcée de fibres de verre.

8. Dispositif selon l'une des revendications précédentes, dans lequel la cavité (10) est formée de deux orifices (10a, 10b) tournés l'un vers l'autre et formés dans les parties de boîtier (5, 6), dans lequel respectivement une profondeur des orifices (10a, 10b) augmente le long d'un axe longitudinal de boîtier (8) des parties de boîtier (5, 6) d'une profondeur minimale (10c) jusqu'à une profondeur maximale (10d).

9. Dispositif (1) selon la revendication 8, dans lequel le ressort à lames (2) est disposé dans la cavité (10) de sorte que la première zone (2a) du ressort à lames (2) est orientée vers la profondeur maximale (10d) de l'orifice (10a, 10b) respectif des parties de boîtier (5, 6).

10. Dispositif (1) selon la revendication 9, dans lequel la cavité (10) présente une section transversale se rétrécissant ou en forme de trompette le long de l'axe longitudinal de boîtier (8) pour limiter un mouvement du ressort à lames (2).

11. Dispositif (1) selon l'une des revendications précédentes, comprenant des paires de blocs magnétiques (17a, 17b ; 17, 17c, 17d) générant le champ magnétique et comportant des polarités **(N,** S) alternées.
